# EUROPEAN PATENT APPLICATION

(11) **EP 2 749 400 A1**
(43) Date of publication of application: **02.07.2014**
(21) Application number: 13177113.1
(22) Date of filing: 18.07.2013
(51) Int. Cl.: B29C 65/58

(54) **Decorative trim molding and fixing method**

(30) Priority: 26.12.2012 CN 201210575221
(71) Applicant: Sundart Products Ltd, Tortola (VG)
(72) Inventor: Leung, Kai Ming, Dongguan City, Guangdong (CN)
(74) Representative: Intès, Didier Gérard André

(57) **Abstract**

The invention relates to a decorative trim molding and its fixing method. The decorative trim molding comprises a trim molding (1) and a base fixing cleat (2). Both sides of the base fixing cleat (2) have projected anchors (21, 22). The back (14) of the decorative trim molding (1) has two recessed grooves (141, 142) for anchoring to the anchors (21, 22) at both sides of the base fixing cleat (2). The surface (143) between the two recessed grooves (141, 142) on back (14) of the trim molding (1) is ploughed inward to allow space for accommodating other ancillary fixings on the base fixing cleat (2). The fixing method comprises fixing of the base fixing cleat (2) to substrate by screws or bolts (3), aligning the decorative trim molding back recessed grooves (141, 142) to the base fixing cleat projected anchors (21, 22) gently pressing the trim molding (1) to the base fixing cleat (2) and fixing process can be completed. The advantages of the invention lie in its easy fixing and dismantling of the decorative trim molding without damages to the trim molding.

## Description

### TECHNICAL FIELD

The present invention relates to design, manufacturing and fixing method of decorative trim molding used on millworks or buildings' walls, particularly to a decorative trim molding for easy assembled, disassembled or replaced and its fixing method as well.

### BACKGROUND

Decorative trim moldings or panels in prior arts are commonly used nowadays on walls or millworks for decorating two or three dimensional pattern. Decorative trim moldings are usually used on walls corner of buildings, door frames or millworks for embellishing and protecting purpose. The use of decorative trims is playing an important part to enhance aesthetical effects in spaces by its profile, texture and colors, etc. It enables to achieve better decorative effects and further provide protecting function.

Materials selected for decorative trim moldings will generally be wood with hard, slender, abrasive-resistant, corrosion-resisting, non-cracked and smooth-surface characteristics. What's more it is always preferable if the wood is easy and suitable for machining, painting, gluing and strong screw holding. After being kiln dried the trim molding could be fabricated by machine or by hand. Such moldings can be used as ceiling trim moldings, ceiling corner trim moldings, wall trim moldings, door or frame trim moldings and millworks moldings as well.

In prior art, the decorative trim moldings are usually fixed by means of nails, screws, bolts or adhesive to substrate surfaces such as walls or millworks.

The Chinese patent No. ZL201120379888.6 discloses a wooden skirting with screw holes on its surface together with ancillary integrated anchors base. The skirting is fixed to walls by means of surface screw and base. However, the technical issues on disassembly and replacement of the skirting are not disclosed in the patent.

A two-component wood trim moldings is disclosed in Chinese patent ZL201120110978. It comprises a first component having a projected anchor and a second component having a recessed groove matching the projected anchor of the first component. Multiple holes are provided on the first component, with which the first component can be fixed to walls by screws. However, the technical issues on disassembly and replacement of the two-component wood trim moldings are not disclosed in the patent.

The above-mentioned prior art use nails, screws or bolt to fix the trim moldings to walls. It leads to the fact that the exposed nails, screws or bolt heads affects the aesthetical appearance of the trim moldings. Also, bolt head plug holes will be exposed if bolt fixing method is used. It will destroy the aesthetic feeling and integral structure of the surface.

Moreover, damages to the trim moldings or wall finishes will be made if replacements of trim moldings are required. Repairs to damaged areas are required before replacement of new trim moldings wherein the cost may be high if the damages are severe.

In prior art, another trim molding fixing method is using adhesive, such as glues on back of the trim moldings and fixed to substrate such as millworks and walls, door frames, etc. With this method, there exist inherent problems on adhesive. For example, the ageing adhesive or inferior and unsatisfied bonding effect will lead to de-bonding problem. Also, the disassembly and replacement of trim moldings will make damage to the substrate surface in which repair cost will be incurred. Particularly the damage cannot be allowed in case of valuable and rare millworks or wall finishes.

Thus, an invention of an assembly and fixing system which enables to overcome or ameliorate the deficiencies of the above-mentioned problems is required for ease of easy disassembly and replacement of trim moldings without damage to substrate.

### SUMMARY OF THE INVENTION

The purpose of the invention is to provide a simple fabricated trim molding which is easy for disassembly and replacement.

The purpose of the invention is achieved by the following technical programme.

The invention of the decorative trim moldings comprises a trim molding and a base fixing cleat; each side of the base fixing cleat has a continuous projected anchor; the surfaces of the front and two sides of the trim molding are exposed as decorative surfaces after the fixing process. The back of the decorative trim molding has two recessed grooves; the two recessed grooves are configured to accommodate the projected anchors at both sides of the base fixing cleat; the surface between the two recessed grooves at the back of the decorative trim molding is ploughed inward to accommodate other ancillary fixings of the base fixing cleat other than the projected anchors. The back surfaces are un-exposed after the fixing process.

The rooftop of the projected anchors may be provided with a semicircular or semielliptic section.

The invention also relates to the fixing method of the trim moldings, in which the base fixing cleat is firstly fixed to substrate with screws or bolts; said substrate includes external surface of buildings' walls, millworks, door frames or any likeness which require decorative finishes. The base fixing cleat is fixed by screw, bolts to the substrate. Adhesive can also be used. After the base fixing cleat is fixed to substrate, the back of the trim molding is placed to face toward the base fixing cleat, aligning the two recessed grooves at the back of trim molding to the projected anchors at both sides of the base fixing cleat and, gently pressing, the trim molding is adapted to enable to be assembled to the base fixing cleat and complete assembly process for the trim molding.

The base fixing cleat in the invention is made of elastic plastic materials which are selected from plastic, rubber or metallic materials. The plastic materials can be polyethylene (PE), polypropylene (PP), polyvinyl chloride (PVC), polystyrene (PS), Acrylonitrile-butadiene-styrene copolymer (ABS), polyphenylene sulfide (PPS), polyphenyl ether (PPE), polyamide (PA), Polycarbonate resin (PC), polyoxymethylene resin (POM), polyurethane (PU), or polymethacrylate etc. The rubber material can be styrene-butadiene rubber (SBR), cis-polybutadiene rubber (BR), Polyisoprene rubber (IR), Ethylene-propylene copolymer (EPR), chloroprene rubber (CR), acrylonitrile-butadiene rubber, silicone rubber, fluorine rubber, polysulfide rubber, polyurethane rubber, chlorohydrin rubber, or Polyacrylate rubber. The metal material can be aluminum, copper, magaluma, manganese steel, stainless steel, brass, bronze, cupronickel, or duralumin, etc.

The advantages of the invention are the simplicity in design, easy fabrication and low fabrication cost. The invention also includes a base fixing cleat for fixing of the trim molding to substrate. After the base fixing cleat is fixed to substrate, the operator aligns the trim molding to the base fixing cleat and gently presses the molding to complete fixing process. It is not necessary to use any fixing device or medium such as screws or adhesive to fix the decorative surface. Another one of advantages of the invention is easy for disassembly and replacement by simply direct removing the trim molding and replaced with new one. No damage will be made to the substrate surface during removal of trim molding. Also, the base fixing cleat can be reused and material and labor costs are economized and saved accordingly.

Preferred embodiments of the invention will now be described below by examples, with but not limited to the accompanying drawings.

### DESCRIPTION OF THE DRAWINGS

FIG.1 is a cross-section view of the decorative trim molding and the base fixing cleat of the present invention.

FIG.2 is the cross-section view of the completed fixing of the decorative trim molding of the present invention.

### DESCRIPTION OF THE PREFERRED EMBODIMENTS OF THE

### INVENTION

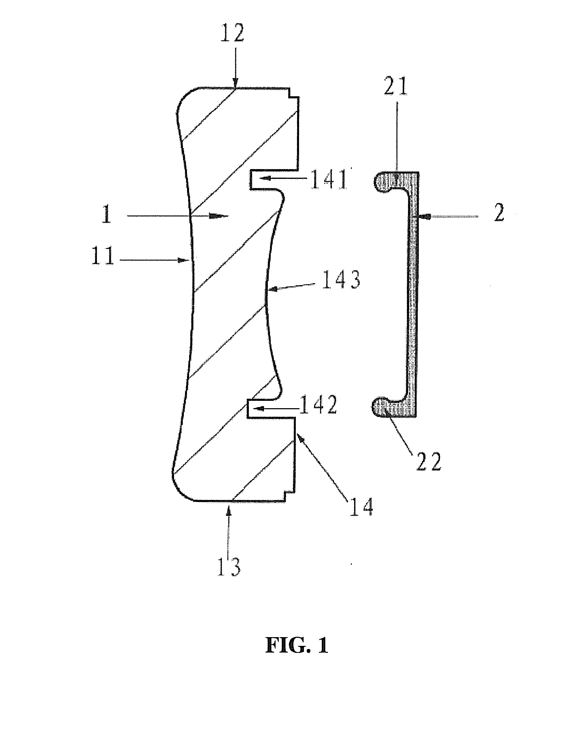

Referring to FIG. 1, a preferred embodiment of present invention is the decorative trim molding 1 and the base fixing cleat 2.

According to FIG.1, the trim molding 1 of the invention comprises a front surface 11 and two side surfaces 12 and 13, all of which are used as exposed finished surface and can be shown visually after the trim molding 1 is fixed. The middle part of the back 14 of the trim molding 1 is ploughed inward for accommodating the base fixing cleat 2. Two recessed grooves 141 and 142 are configured at the plough-inward middle part of the back 14, which are used to anchor into the projected anchors 21 and 22 of the base fixing cleat 2. The surface 143 between the two recessed grooves 141 and 142 at the back 14 of the trim molding 1 is ploughed inward to accommodate other ancillary fixings of the base fixing cleat 2 other than the projected anchors 21 and 22. The back 14 cannot be observed after trim molding 1 is fixed onto the base fixing cleat 2.

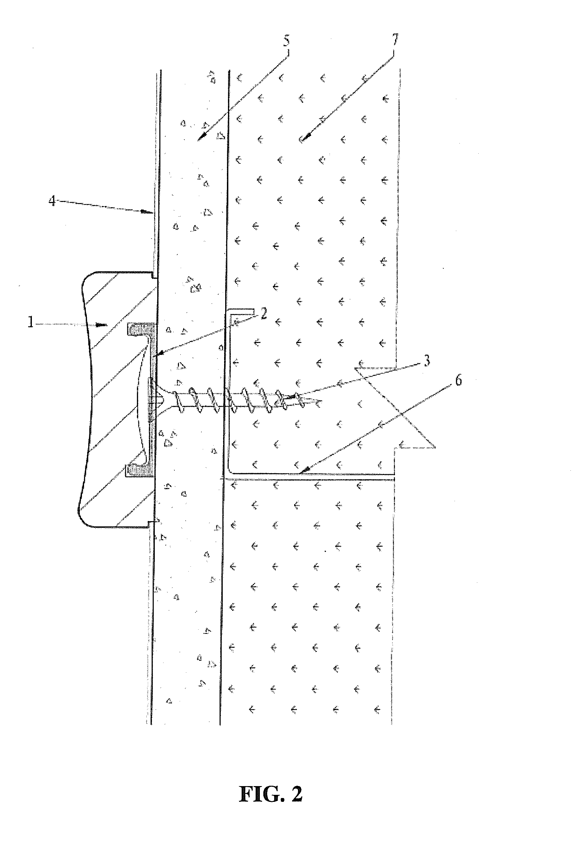

Cross-section view of the completed assembly in FIG.2 describes the preferred embodiment of the present invention. In FIG.2, the trim molding 1 is fixed to base fixing cleat 2 and the base fixing cleat 2 is fixed to wall by means of screws 3. The wall comprises wall coverings 4. A finished gypsum board 5 is installed under the base fixing cleat 2, Acoustic insulation 7, in-filled with steel stud 6, is mounted at the underside of the finished gypsum board 5. The base fixing cleat 2 is fixed to the steel stud 6 by means of screws 3. The preferred implementing process shown in FIG.2 comprises erecting steel stud 6 and gypsum board 5 with acoustic insulation 7, fixing the base fixing cleat 2 to the wall surface by means of fixing medium such as screw or bolts, placing the back 14 of trim molding 1 to face onto the base fixing cleat 2, aligning the recessed grooves 141 and 142 at back 14 of the trim molding 1 to the projected anchors 21 and 22 of the base fixing cleat 2, gently pressing toward the base fixing cleat 2 to complete the fixing process.

In case of replacing the trim molding 1, the existing trim molding 1 is firstly removed by the operator, and the renewed trim molding 1 is aligned and gently pressed down. The fixing can be completed accordingly.

While we have shown and described certain present preferred embodiments of our decorative trim molding and fixing system and have illustrated certain present preferred methods of making, installing and selling the same, it is to be distinctly understood that the invention is not limited thereto but may be otherwise variously embodied and practiced within the scope of the claims.

## Claims

1. A decorative trim molding,
wherein said decorative trim molding comprises a trim molding (1) and a base fixing cleat (2) ;
each side of the base fixing cleat (2) has a continuous projected anchor (21,22);
the back (14) of the trim molding (1) has two recessed grooves (141, 142);
the two recessed grooves (141, 142) are configured to accommodate the projected anchors (21, 22) at both sides of the base fixing cleat (2) ;
the surface (143) between the two recessed grooves (141, 142) at the back (14) of the trim molding (1) is ploughed inward to accommodate other ancillary fixings of the base fixing cleat (2) other than the projected anchors (21, 22).

2. The decorative trim molding of claim 1, wherein the top edge of the projected anchors (21, 22) is provided with a semicircular or semielliptic section.

3. The decorative trim molding of claim 1 or 2, wherein the base fixing cleat (2) is made of elastic plastic materials which are selected from plastic, rubber or metallic materials.

4. The decorative trim molding of claim 3, wherein the plastic materials are optimized from polyethylene, polypropylene, polyvinyl chloride, polystyrene, Acrylonitrile-butadiene-styrene copolymer, polyphenylene sulfide, polyphenyl ether, polyamide, Polycarbonate resin, polyoxymethylene resin, polyurethane, or polymethacrylate.

5. The decorative trim molding of claim 3 or 4, wherein the rubber materials are optimized from styrene-butadiene rubber, cis-polybutadiene rubber, Polyisoprene rubber, Ethylene-propylene copolymer, chloroprene rubber, acrylonitrile-butadiene rubber, silicone rubber, fluorine rubber, polysulfide rubber, polyurethane rubber, chlorohydrin rubber, or Polyacrylate rubber.

6. The decorative trim molding of any one of claims 3 to 5, wherein the metallic materials are optimized from aluminum, copper, magnesium alloy, manganese steel, stainless steel, brass, bronze, cupronickel, or duralumin.

7. A fixing method for the decorative trim molding of any one of claims 1 to 6,
wherein the base fixing cleat (2) is fixed to substrate with screws (3) or bolts;
said substrate includes external surface of buildings' walls, millworks, door frames or any likeness which requires decorative finishes;
after the base fixing cleat (2) is fixed to substrate, the back (14) of the trim molding (1) is placed to face toward the base fixing cleat (2), aligning the two recessed grooves (141, 142) at the back (14) of trim molding (1) to the projected anchors (21, 22) at both sides of the base fixing cleat (2) and,
with gently pressing, the trim molding (1) enables to be assembled to the base fixing cleat (2) to complete assembly process for the trim molding (1).

8. The fixing method of claim 7, wherein the base fixing cleat (2) is fixed to the substrate with adhesives.
